# EUROPEAN PATENT SPECIFICATION

(11) **EP 1 506 073 B1**
(45) Date of publication and mention of the grant of the patent: **15.02.2006**
(21) Application number: 03720753.7
(22) Date of filing: 02.05.2003
(51) Int. Cl.: B23Q 17/24, B23Q 17/09, G01B 11/00, G01B 11/02, G01B 21/04

(54) **BROKEN TOOL DETECTOR**
WERKZEUGBRUCHSENSOR
DETECTEUR D'OUTIL CASSE

(30) Priority: 03.05.2002 GB 0210175
(43) Date of publication of application: 16.02.2005
(73) Proprietor: Renishaw plc, Wotton-Under-Edge Gloucestershire GL12 8JR (GB)
(72) Inventor: BELL, Colin, Timothy, Berkeley, Gloucestershire GL13 9AS (GB); STIMPSON, Victor,Gordon, Avening, Gloucestershire GL8 8LT (GB)
(74) Representative: Jackson, John Timothy
(86) International application number: PCT/GB2003/001930
(87) International publication number: WO 2003/092955

(56) References cited:
- EP-A- 1 050 368
- DE-A- 3 501 533
- US-A- 4 420 253
- US-A- 4 502 823
- PATENT ABSTRACTS OF JAPAN vol. 1999, no. 09, 30 July 1999 (1999-07-30) & JP 11 099450 A (MAKINO MILLING MACH CO LTD), 13 April 1999 (1999-04-13)
- PATENT ABSTRACTS OF JAPAN vol. 017, no. 412 (P-1583), 30 July 1993 (1993-07-30) & JP 05 079991 A (NEC CORP), 30 March 1993 (1993-03-30)

## Description

This invention relates to the detection of tools and the like in a beam of radiation. In particular, but not exclusively, the invention relates to the detection of a cutting tool in the path of light emitted by a broken cutting tool detector.

The detection of cutting tools and the absence of such a tool (i.e. a broken or missing tool) can be detected by a known tool detector. Such a device is shown in our prior patent application EP 1050368. Generally a workpiece machining cycle includes one or more tool detection routines so that scrap work is avoided. The routine may consist of:
activating the broken tool detector;
awaiting a "tool found" signal from the detector;
carrying on with the machining cycle or stopping the cycle if no signal is present.

This routine has a flaw when "break beam" type tool detectors are used in a machine tool environment.
Swarf and coolant can break the beam durijhg the routine and provide a false "tool found" signal. Thus the detector will report that dll is well when in fact the tool is not present. One or more repeats of the routine can be made as a confirmation but this adds time to the cycle and so is undesirable.

Us 4,502,823 discloses a method of detecting when fine drill bits have been broken whereby a pulsed light signal is used which minimises the effects of ambient light on the detector. This improves the sensitivity of the system enabling small breaks in the drill bits to be detected.

DE 35 015 33 forming the base of the preamble of claims 1 and 8 is concerned with monitoring tool failure by detecting the shadow which is produced by the tool on the detector. Use of a pixelated detector enables the tool tip to be established which is used to generate a tool length thus enabling a broken tool to be identified. The system can be used with either stationary or moving tools.

According to one aspect of this invention there is provided a method of operating a break beam tool detector having a radiation emitter for producing a beam of radiation, a radiation sensor for sensing the radiation and an output, the method comprising the steps of:
positioning a tool in the beam; and
activating emitter to emit the radiation;
characterised in that the method includes the steps of:
   monitoring radiation at the sensor for a predetermined time period; and
   changing the output of the detector only if the emitted radiation is sensed by the sensor within the predetermined time period.

Thus embodiments of the invention provide for any "no tool found" (i.e. light at the sensor) signal to cause a latching of the output of the detector which can be detected as an "M" code in a machining cycle. Such a detection routine is immune to swarf and coolant blocking the beam because momentary "tool found" (i.e. beam broken) signals are ignored, rather, any "no tool found" signals cause the latching of the output. If no light was detected during the predetermined time then a "good tool" signal will be issued by the tool detector.

According to a second aspect the invention provides a break beam tool detector comprising a radiation emitter for producing a beam of radiation, a radiation sensor for sensing the radiation and an output, wherein the detector is operated such that following activation of the emitter the output of the detector is changed only if the emitted radiation is sensed by the sensor within a predetermined time period.

Embodiments of the invention will now be described in more detail with reference to the drawings, wherein:
Fig 1 shows a break beam type broken tool detection device;
Fig 2 shows a flow diagram illustrating a method of tool breakage detection; and
Figs 3a,b and c show a graphical relationship between detector output and beam obstruction.

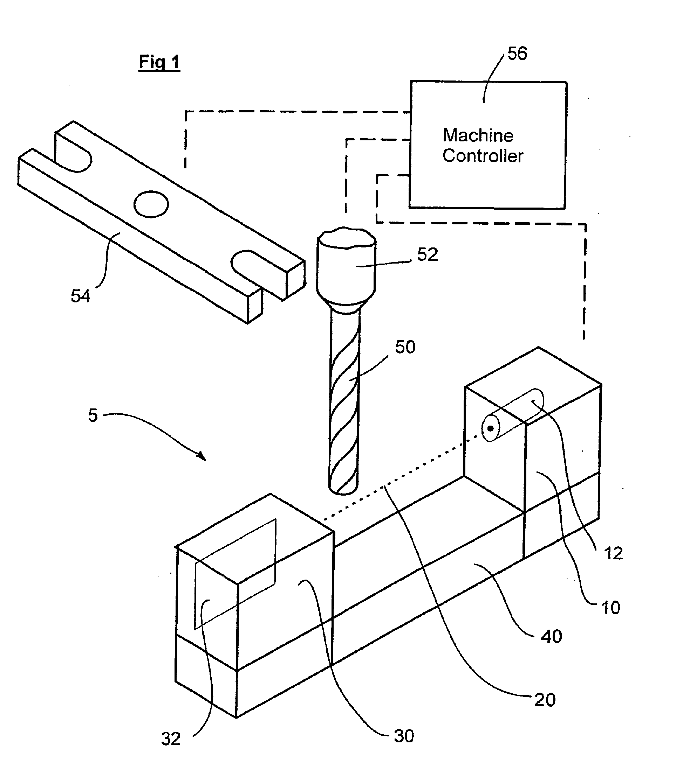

Fig 1 shows a break beam type detector 5, one such example being described in our prior art patent application EP 1050368. The detector 5 has a radiation emitter 10, in this instance a laser light source 12, emitting a beam 20 of light and a light sensor 30 for sensing the presence or absence of all or part of the beam. The emitter and sensor are mounted to a support structure 40. An automatic tool change device 54 may mechanically exchange tools into and out of a toolholder 52. When a tool 50 held in the toolholder 52 is passed through the beam 20 then circuitry 32 within the sensor 30 will cause the output of the detector to change.

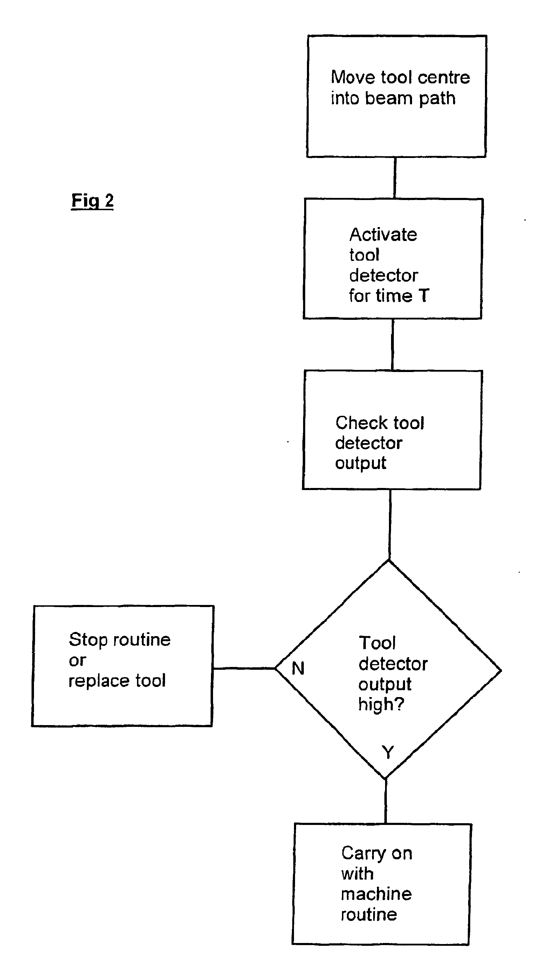

Fig 2 shows the steps performed by the machine tool controlled by the machine controller (56 Fig 1). The controller 56 has a machining routine in which it is desired to detect the state of the tool. Such a routine will usually be performed when a tool is first loaded automatically into the tool holder 52. In that way machining cycles which are carried out whilst a tool is broken can be avoided. Alternatively or as well as the above, the routine can be performed at the end of a machining cycle with a particular tool. In either case an indication will be provided that something has gone wrong with the last machined workpiece and the tool, so operator intervention can be made.

The routine is as detailed in the flow diagram of Fig 2 and is described in more detail below.

The tool is moved so that its approximate centre is in line with the beam 20. In this example the beam is narrower than the tool so when in place will completely obscure the beam, provided that it is intact and not broken. It is desirable that the end of the tool is brought into the beam rather than its base, because detection of a tool with only a broken end portion could be made in this way if its base is intact.

The tool detector is activated when the tool should have obscured the beam. Activation is made by the machine tool controller routine for a given predetermined time. At activation the circuitry 32 of the detector 5 monitors the light level of the sensor 30 for the predetermined time. After such a time the output will either be latched to a high state or a low state, e.g. +24 volts d.c. or 0 volts d.c. The output is fed into an input port of the controller for informing the routine running within the controller at the end of the time period. The time period is determined by the machine tool controller and can be set to any length, dependant principally on the amount of coolant that is expected to be present during the cycle, e.g. 10mS to 10 seconds.

If the output is high then the tool is considered to be good, and the routine is continued, e.g. cutting is continued. If-the output is low then the routine can be stopped and the fault flagged. Alternatively a spare tool can be substituted if the output is low.

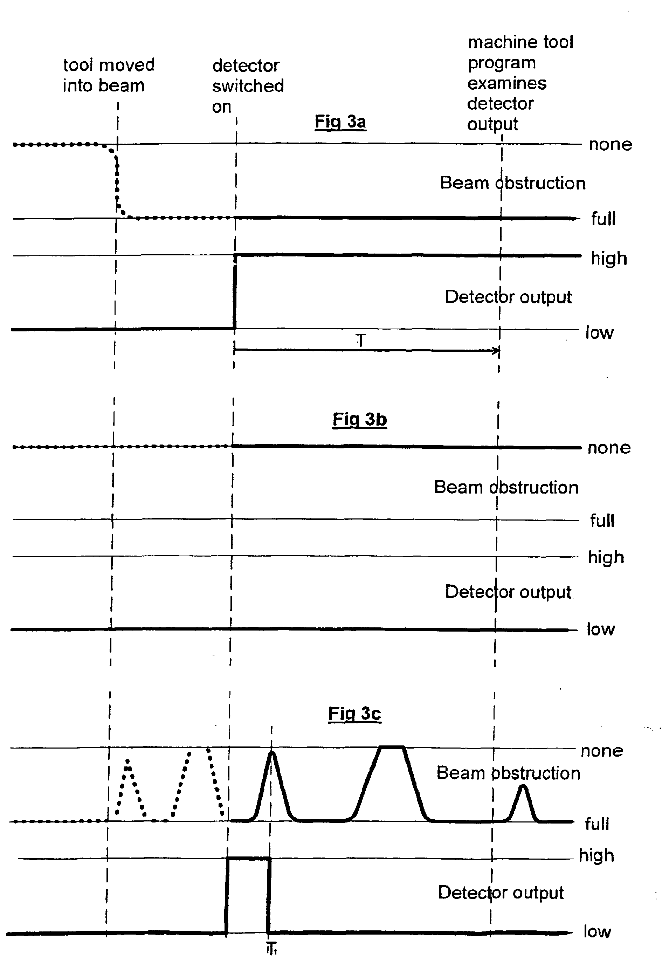

Fig 3 shows the relationship between the blocked or unblocked beam path 20 and the output of the detector 5. In each of the graphs of Figs 3a,b and c the top band represents the degree of blocking of the beam, and the lower band in each Figure represents the output of the sensor circuit 32.

In Fig 3a there is shown an output when a good tool is detected. The first part of the upper line is shown as a dotted line to denote that it is a notional part of the line, i.e. detection is not taking place e.g. because the beam has not yet been switched on so there is no beam to be obscured and the dotted line shows what would happen if the beam were present.

When the tool is centred in the beam path the detector is activated and the presence or absence of light from the beam is detected for a time T by sensor circuit 32. In Fig 3a no light is detected so the output goes high immediately and stays high until the machine tool controller routine reads the output (voltage in this case). The routine reports a good tool and is continued.

Fig 3b shows the same relationship illustrated in Fig 3a but a broken tool is present in this case. Since no beam obstruction takes place the output starts low and remains low because at least some of the beam light has been detected by the sensor circuit during time T.
When the machine tool routine reads the output a fault is apparent and appropriate action is taken, e.g. stopping of the machine or changing the tool.

Fig 3c shows a more realistic situation in a machine tool environment. Here a broken tool is present as well as contamination in the form of swarf and coolant etc. Thus the beam obstruction flickers between no obstruction and full or partial obstruction caused by the contamination. When the detector circuit 32 detects light for the first time (at point T₁) within the time T then the output is latched to a low state. Again in such a circumstance a fault is apparent when the machine tool reads the output.

So, using the system described above there is no need to have clean conditions for monitoring tool breakage.

Many modifications and variants to the foregoing will be apparent to the skilled addressee. The invention has been described for use with a machine tool but other similar machines could be used e.g. robotic devices which need to ensure an item has been picked up. The invention has been described for use in detecting the presence or absence of tools but other items could be detected e.g. part marking devices or welding rods. When used to detect a tool or similar, the tool etc need not be located in a tool holder 52, e.g. the tool might be located in a tool carousel or other off-machine tool holding device whilst it is detected.

More particularly the machine tool controller method employed provides that the detector 5 is activated after the tool is centred in the beam path 20. However it is possible that the detector is powered and the beam is in use before the tool is centred. In such an instance the sensor circuit 32 will not be caused to latch until light is sensed within the time period T, the period being started by the machine tool controller. Whilst the detection beam 20 utilises laser light, other forms of electromagnetic radiation are envisaged also, e.g. infra-red or r.f radiation. The beam might be wider than the tool, provided a significant portion (e.g. more than half) of the radiation of the beam is obscured by the item to be detected.

The predetermined time period T may be provided by a pulse of light from the laser, an activation of the sensor for a period T, via the machine controller, as a result of a beam shuttering system, or as preferred by a timer internal to the detector at circuit 32.

The embodiments illustrated show a radiation emitter and a radiation sensor aligned so that a beam of radiation between the emitter and the sensor is broken during detection of an item in the beam. However the invention may b e utilised with a detector wherein the emitter and sensor are adjacent and detection takes place by reflection of a beam off an item and onto the sensor.

The invention has been described as having an output of either 0 or 24 d.c. volts. It is possible that other voltage outputs may be used to suit the input of the machine tool's controller. Thus the voltage could be between 0 and 50 volts. Additionally some controllers require an electrical circuit to be opened and closed rather than a voltage signal, so the output could be fed to a relay or the like so that the relay latches normally on or normally off. In this way the output has a resistance which changes.

## Claims

1. A method of operating a break beam tool detector having a radiation emitter (10) for producing a beam (20) of radiation, a radiation sensor (30) for sensing the radiation and an output, the method comprising the steps of:
positioning a tool (50) in the beam; and
activating emitter to emit the beam radiation;
**characterised in that** the method includes the steps of:
monitoring radiation at the sensor for a predetermined time period (T); and
changing the output of the detector only if the emitted radiation sensed by the sensor within the predetermined time period (T) exceeds a predetermined amount.

2. A method of operating a break beam tool detector as claimed in claim 1 wherein the changing of the output comprises latching of the output.

3. A method of operating a break beam tool detector as claimed in claim 1 wherein the radiation is a beam (20) of light from a laser (12).

4. A method of operating a break beam tool detector as claimed in claim 1,2 or 3 wherein the output is a constant voltage of between 0 and 50 volts d.c.

5. A method of operating a break beam tool detector as claimed in any one preceding claim 1 to 3 wherein the output has a resistance and the changed output is a. change in that resistance.

6. A method of operating a break beam tool detector as claimed in claim 5 wherein the output further comprises a relay for providing the resistance and the changed output is a change in the state of the relay.

7. A method of operating a break beam tool detector as claimed in any one preceding claim wherein the predetermined period of time is adjustable.

8. A break beam tool detector comprising a radiation emitter (10), for producing a beam (20) of radiation, a radiation sensor (30) for sensing the radiation and an output, **characterised in that** the detector is operated such that following activation of the emitter the output of the detector is changed only if the emitted radiation sensed by the sensor within a predetermined time period (T) exceeds a predetermined amount when a tool (50) is in the beam.

9. A break beam tool detector as claimed in claim 8 wherein the change in output comprises a latching of the output.

10. A break beam tool detector as claimed in claim 8 or 9 wherein the radiation is a beam (20) of light from a laser (12).

11. A break beam tool detector as claimed in any one of the preceding claims 8 to 10 wherein the output is a constant voltage of between 0 and 50 volts d.c.

12. A break beam tool detector as claimed in any one of the preceding claims 8 to 10 wherein the output has a resistance and the changed output is a change in that resistance.

13. A break beam tool detector as claimed in claim 12 wherein the output further comprises a relay for providing the resistance and the changed output is a change in the state of the relay.

14. A break beam tool detector as claimed in any one of the preceding claims 8 to 13 wherein the predetermined period of time is adjustable.

## Patentansprüche

1. Verfahren zum Betrieb eines Unterbrechungsstrahlwerkzeugdetektors mit einem Strahlungssender (10) zur Erzeugung eines Strahls (20) einer Strahlung, einem Strahlungssensor (30) zur Erfassung der Strahlung und einem Ausgang, wobei das Verfahren die Schritte umfasst, dass:
ein Werkzeug (50) in dem Strahl positioniert wird; und
der Sender aktiviert wird, um die Strahlung in dem Strahl auszusenden;
**dadurch gekennzeichnet, dass**
das Verfahren die Schritte umfasst, dass:
eine Strahlung an dem Sensor über eine vorbestimmte Zeitdauer (T) überwacht wird; und
der Ausgang des Detektors nur dann geändert wird, wenn die ausgestrahlte Strahlung, die von dem Sensor innerhalb der vorbestimmten Zeitdauer (T) erfasst wird, eine vorbestimmte Größe überschreitet.

2. Verfahren zum Betrieb eines Unterbrechungsstrahlwerkzeugdetektors nach Anspruch 1, wobei die Änderung des Ausgangs ein Verriegeln des Ausgangs umfasst.

3. Verfahren zum Betrieb eines Unterbrechungsstrahlwerkzeugdetektors nach Anspruch 1, wobei die Strahlung ein Strahl (20) aus Licht von einem Laser (12) ist.

4. Verfahren zum Betrieb eines Unterbrechungsstrahlwerkzeugdetektors nach einem der Ansprüche 1,2 oder 3, wobei der Ausgang eine konstante Spannung zwischen 0 und 50 Volt DC ist.

5. Verfahren zum Betrieb eines Unterbrechungsstrahlwerkzeugdetektors nach einem der vorhergehenden Ansprüche 1 bis 3, wobei der Ausgang einen Widerstand besitzt und der geänderte Ausgang eine Änderung dieses Widerstands ist.

6. Verfahren zum Betrieb eines Unterbrechungsstrahlwerkzeugdetektors nach Anspruch 5, wobei der Ausgang ferner ein Relais umfasst, um den Widerstand vorzusehen, und der geänderte Ausgang eine Änderung des Zustands des Relais ist.

7. Verfahren zum Betrieb eines Unterbrechungsstrahlwerkzeugdetektors nach einem der vorhergehenden Ansprüche, wobei die vorbestimmte Zeitdauer einstellbar ist.

8. Unterbrechungsstrahlwerkzeugdetektor mit einem Strahlungssender (10) zur Erzeugung eines Strahls (20) einer Strahlung, einem Strahlungssensor (30) zur Erfassung der Strahlung und einem Ausgang, **dadurch gekennzeichnet, dass** der Detektor derart betrieben wird, dass nach einer Aktivierung des Senders der Ausgang des Detektors nur dann geändert wird, wenn die ausgesendete Strahlung, die von dem Sensor innerhalb einer vorbestimmten Zeitdauer (T) erfasst wird, eine vorbestimmte Größe überschreitet, wenn sich ein Werkzeug (50) in dem Strahl befindet.

9. Unterbrechungsstrahlwerkzeugdetektor nach Anspruch 8, wobei die Änderung des Ausgangs ein Verriegeln des Ausgangs umfasst.

10. Unterbrechungsstrahlwerkzeugdetektor nach einem der Ansprüche 8 oder 9, wobei die Strahlung einen Strahl (20) aus Licht von einem Laser (12) ist.

11. Unterbrechungsstrahlwerkzeugdetektor nach einem der vorhergehenden Ansprüche 8 bis 10, wobei der Ausgang eine konstante Spannung zwischen 0 und 50 Volt DC ist.

12. Unterbrechungsstrahlwerkzeugdetektor nach einem der vorhergehenden Ansprüche 8 bis 10, wobei der Ausgang einen Widerstand besitzt und der geänderte Ausgang eine Änderung dieses Widerstandes ist.

13. Unterbrechungsstrahlwerkzeugdetektor nach Anspruch 12, wobei der Ausgang ferner ein Relais umfasst, um den Widerstand vorzusehen, und der geänderte Ausgang eine Änderung des Zustands des Relais ist.

14. Unterbrechungsstrahlwerkzeugdetektor nach einem der vorhergehenden Ansprüche 8 bis 13, wobei die vorbestimmte Zeitdauer einstellbar ist.

## Revendications

1. Une méthode pour exploiter un détecteur d'outil par obstruction de faisceau ayant un émetteur de rayonnement (10) pour produire un faisceau (20) de rayonnement, un capteur de rayonnement (30) pour capter le rayonnement et une sortie, la méthode mettant en jeu les étapes suivantes :
positionner un outil (50) dans le faisceau ; et
activer l'émetteur pour qu'il émette le rayonnement d'un faisceau ;
se caractérisant en cela que la méthode met en jeu les étapes suivantes :
contrôler le rayonnement au niveau du capteur pendant une période prédéterminée (T) ; et
changer la sortie du détecteur seulement si le rayonnement émis capté par le capteur dans la période prédéterminée (T) dépasse une valeur prédéterminée.

2. Une méthode pour exploiter un détecteur d'outil par obstruction de faisceau telle que revendiquée dans la revendication 1, dans laquelle le changement de la sortie comporte une mise en mémoire de la sortie.

3. Une méthode pour exploiter un détecteur d'outil par obstruction de faisceau telle que revendiquée dans la revendication 1, dans laquelle le rayonnement est un faisceau (20) de lumière venant d'un laser (12).

4. Une méthode pour exploiter un détecteur d'outil par obstruction de faisceau telle que revendiquée dans la revendication 1, 2, ou 3 dans laquelle la sortie est une tension constante comprise entre 0 et 50 volts C.C.

5. Une méthode pour exploiter un détecteur d'outil par obstruction de faisceau telle que revendiquée dans l'une quelconque des revendications 1 à 3 dans laquelle la sortie a une résistance et la sortie changée est un changement dans cette résistance.

6. Une méthode pour exploiter un détecteur d'outil par obstruction de faisceau telle que revendiquée dans la revendication 5 dans laquelle la sortie comporte en outre un relais pour fournir la résistance et la sortie changée est un changement dans l'état du relais.

7. Une méthode pour exploiter un détecteur d'outil par obstruction de faisceau telle que revendiquée dans l'une quelconque des revendications précédentes dans laquelle la période prédéterminée est réglable.

8. un détecteur d'outil par obstruction de faisceau comprenant un émetteur de rayonnement (10) pour produire un faisceau (20) de rayonnement, un capteur de rayonnement (30) pour capter le rayonnement et une sortie, qui se caractérise en cela que le détecteur est exploité de façon que, suite au déclenchement de l'émetteur, la sortie du détecteur soit changée seulement si le rayonnement émis capté par le capteur dans la période prédéterminée (T) dépasse une valeur prédéterminée quand un outil (50) est dans le faisceau.

9. Un détecteur d'outil par obstruction de faisceau tel que revendiqué dans la revendication 8 dans lequel le changement de sortie comporte une mise en mémoire de la sortie.

10. Un détecteur d'outil par obstruction de faisceau tel que revendiqué dans les revendications 8 ou 9 dans lequel le rayonnement est un faisceau (20) de lumière venant d'un laser (12).

11. Un détecteur d'outil par obstruction de faisceau tel que revendiqué dans l'une quelconque des revendications précédentes 8 à 10 dans lequel la sortie est une tension constante comprise entre 0 et 50 volts C.C.

12. Un détecteur d'outil par obstruction de faisceau tel que revendiqué dans l'une quelconque des revendications précédentes 8 à 10 dans lequel la sortie a une résistance et la sortie changée est un changement dans cette résistance.

13. Un détecteur d'outil par obstruction de faisceau tel que revendiqué dans la revendication 12 dans lequel la sortie comporte en outre un relais pour fournir la résistance et la sortie changée est un changement dans l'état du relais.

14. Un détecteur d'outil par obstruction de faisceau tel que revendiqué dans l'une quelconque des revendications précédentes 8 à 13 dans lequel la période prédéterminée est réglable.
